# EUROPEAN PATENT APPLICATION

(11) **EP 4 079 599 A1**
(43) Date of publication of application: **26.10.2022**
(21) Application number: 20903928.8
(22) Date of filing: 14.12.2020
(51) Int. Cl.: B61L 25/04, G06Q 10/00, G06Q 50/30

(54) **INSTRUMENT MANAGEMENT DEVICE**

(30) Priority: 16.12.2019 JP 2019226469
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: SAKAMOTO Yoshiyuki, Kawasaki-shi, Kanagawa 212-0013 (JP); YUGE Akio, Kawasaki-shi, Kanagawa 212-0013 (JP); TAKAHASHI Isao, Kawasaki-shi, Kanagawa 212-0013 (JP); ABE Yuuichi, Kawasaki-shi, Kanagawa 212-0013 (JP); NOZAWA Yukiteru, Kawasaki-shi, Kanagawa 212-8585 (JP); MOCHIZUKI Yasufumi, Fuchu-shi, Tokyo 183-8511 (JP); HIRAI Jun, Kawasaki-shi, Kanagawa 212-8585 (JP); TODA Hayato, Kawasaki-shi, Kanagawa 212-0013 (JP); KIMURA Yumi, Kawasaki-shi, Kanagawa 212-0013 (JP)
(74) Representative: AWA Sweden AB
(86) International application number: PCT/JP2020/046616
(87) International publication number: WO 2021/125146

(57) **Abstract**

An equipment managing apparatus according to a present embodiment includes an equipment information reading unit, a data inputting and outputting unit, and an equipment information managing unit. The equipment information reading unit reads specifying information for specifying facility equipment, and obtains identification information that identifies the facility equipment based on equipment data and the specifying information. The data inputting and outputting unit receives input of inspection data of the facility equipment, and controls a display section to display the inspection data. The equipment information managing unit associates the identification information of the facility equipment to be inspected, and the inspection data that is inputted to the data inputting and outputting unit with each other and stores the information and the data in the data storing unit, extracts the inspection data of a past of the facility equipment to be inspected from the data storing unit based on the identification information, and controls the data inputting and outputting unit to display the extracted inspection data on the display section.

## Description

### [Technical Field]

Embodiments according to the present invention relates to an equipment managing apparatus.

### [Background Art]

In recent years, owing to advances in IoT (Internet of Things) technology, the status of vehicles such as railroads has been easily grasped on the ground. It has also become possible to upload vehicle data detected by various sensors and the like to a server and to download a large amount of uploaded data in a short time. However, there have been the cases where the collected data are not fully utilized for vehicle operation, efficiency of management work, and quality improvement or efficient implementation of management and maintenance of vehicles and equipment that configures the vehicles.

### [Citation List]

### [Patent Literature]

[Patent Literature 1] Japanese Patent Laid-Open No. 10-76952

### [Summary of Invention]

### [Technical Problem]

It is an object to provide an equipment managing apparatus capable of more facilitating monitoring, and management and maintenance of equipment.

### [Solution to Problem]

An equipment managing apparatus according to a present embodiment includes an operation information inputting and outputting unit, an equipment information reading unit, a data inputting and outputting unit, an equipment information managing unit, a maintenance information managing unit, and an operation information managing unit. The operation information inputting and outputting unit obtains operation data of facility equipment, and stores the operation data in a data storing unit that stores equipment data concerning a configuration of the facility equipment, and maintenance management data concerning maintenance and management of the facility equipment. The equipment information reading unit reads specifying information for specifying the facility equipment, and obtains identification information that identifies the facility equipment based on the equipment data and the specifying information. The data inputting and outputting unit receives input of inspection data of the facility equipment, and controls a display section to display the inspection data. The equipment information managing unit associates the identification information of the facility equipment to be inspected, and the inspection data that is inputted to the data inputting and outputting unit with each other and stores the information and the data in the data storing unit, extracts the inspection data of a past of the facility equipment to be inspected from the data storing unit based on the identification information, and controls the data inputting and outputting unit to display the extracted inspection data on the display section. The maintenance information managing unit extracts the maintenance management data of the facility equipment to be inspected from the data storing unit based on the identification information, and controls the data inputting and outputting unit to display the extracted maintenance management data on the display section. The operation information managing unit extracts the operation data of the facility equipment to be inspected from the data storing unit based on the identification information, and controls the data inputting and outputting unit to display the extracted operation data on the display section.

### [Brief Description of Drawings]

[Figure 1] Figure 1 is a block diagram showing a configuration of an equipment managing apparatus according to a first embodiment.
[Figure 2] Figure 2 is a view showing an equipment information holding unit and an equipment information reading unit according to the first embodiment.
[Figure 3] Figure 3 is a block diagram showing a configuration of an equipment managing apparatus according to a second embodiment.
[Figure 4] Figure 4 is a block diagram showing a configuration of an equipment managing apparatus according to a third embodiment.
[Figure 5] Figure 5 is a diagram showing one example of a data model by an information model converting and managing unit.

### [Description of Embodiments]

Hereinafter, embodiments according to the present invention are described with reference to the drawings. The present embodiments do not limit the present invention. The drawings are schematic or conceptual, and the ratio or the like of each part is not always the same as actual one. In the description and the drawings, the same elements as those already described with respect to the drawings that are already mentioned are designated by the same reference signs, and detailed explanation is omitted as appropriate.

### (First Embodiment)

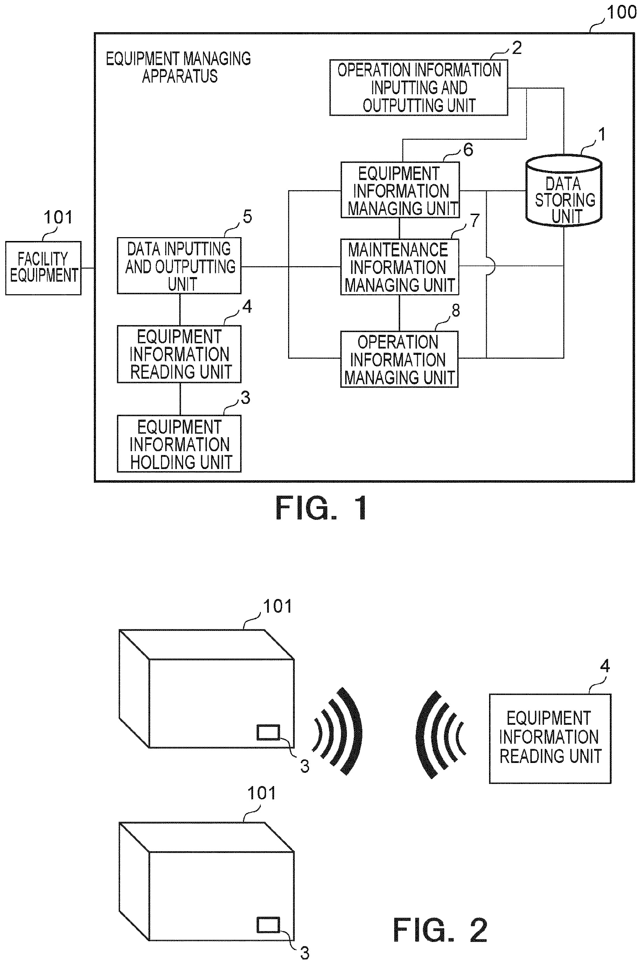

Figure 1 is a block diagram showing a configuration of an equipment managing apparatus 100 according to a first embodiment. The equipment managing apparatus 100 performs monitoring and management of facility equipment 101 by using data concerning the facility equipment 101. Note that the facility equipment 101 may include equipment, components and the like that configure the facility equipment 101. Hereinafter, the facility equipment 101 includes at least one of a railroad vehicle and equipment that is mounted on the railroad vehicle, unless otherwise noted. The equipment managing apparatus 100 includes a data storing unit 1, an operation information inputting and outputting unit 2, an equipment information holding unit 3, an equipment information reading unit 4, a data inputting and outputting unit 5, an equipment information managing unit 6, a maintenance information managing unit 7, and an operation information managing unit 8.

The data storing unit 1 stores various data. The data storing unit 1 stores operation data of the facility equipment 101, equipment data concerning the facility equipment 101, maintenance management data concerning maintenance and management of the facility equipment 101, and inspection data of the facility equipment 101, for example. The operation data includes operation information of a railroad vehicle and an operation status of mounted equipment, for example. The operation information of the railroad vehicle is, for example, a position, a speed and the like of the vehicle. The operation status of the mounted equipment includes, for example, a state of start or stop, a current, a voltage, an abnormality alarm, vehicle start or stop (starting or stopping) state and the like. The equipment data includes, for example, design data and installation position data of the facility equipment 101. The design data includes, for example, drawings, audio, photographs, videos, numerical values and the like, concerning design information of the facility equipment 101. The installation position data includes, for example, a car number or the like where the facility equipment 101 is installed. The maintenance management data includes, for example, a maintenance work procedure, a work manual, a maintenance work history, an elapsed time from last maintenance work, a past maintenance and failure history, an inspection time, equipment life and the like. The work procedure may be displayed by means of AR (Augmented Reality) or VR (Virtual Reality), for example. The inspection data includes information concerning an inspection result of the facility equipment 101. The inspection data includes, for example, photographs, numerical values and the like. Note that the data storing unit 1 may be provided outside the equipment managing apparatus 100.

The operation information inputting and outputting unit 2 obtains the operation data of the facility equipment 101. The operation information inputting and outputting unit 2 obtains the operation data from a data server provided on a cloud outside the equipment managing apparatus 100, for example. In the data server, the operation data transmitted from the sensors and the like provided in the facility equipment 101 are accumulated. Further, the operation information inputting and outputting unit 2 stores the operation data in the data storing unit 1 that stores the equipment data and maintenance management data. Further, the operation information inputting and outputting unit 2 performs software update with respect to operations of a device for collecting the operation data and the facility equipment 101, and outputs parameter setting information to outside the equipment managing apparatus 100.

Figure 2 is a view showing the equipment information holding unit 3 and the equipment information reading unit 4 according to the first embodiment.

The equipment information holding unit 3 holds specifying information for specifying the facility equipment 101. The equipment information holding unit 3 is, for example, a tag provided for each facility equipment 101. In more detail, the equipment information holding unit 3 is, for example, a RFID (Radio Frequency Identifier) tag, and can perform short-range wireless communication with the equipment information reading unit 4. Note that the equipment information holding unit 3 may be a barcode, a QR code (registered trademark), a color code from which information is read with a camera or the like.

The equipment information reading unit 4 reads the specifying information for specifying the facility equipment 101. Further, the equipment information reading unit 4 obtains identification information that identifies the facility equipment 101 based on the specifying information and the equipment data. The equipment information reading unit 4 obtains the equipment data from the data storing unit 1 via the equipment information managing unit 6, for example. The equipment information reading unit 4 identifies the facility equipment 101 by using, for example, the installation position data, the design data and the like of the facility equipment 101 that are included in the equipment data, for example. Note that the equipment information reading unit 4 may send the specifying information to the equipment information managing unit 6, and the equipment information managing unit 6 may obtain the identification information. The equipment information reading unit 4 may be a reader that reads information on the tag provided on the facility equipment 101, for example. The equipment information reading unit 4 may be, for example, a tablet terminal, a smartphone or the like.

As shown in Figure 1, the data inputting and outputting unit 5 receives input of the inspection data of the facility equipment 101. Further, the data inputting and outputting unit 5 controls a display section to display the inspection data. The display section (not illustrated) is provided in the data inputting and outputting unit 5, for example. The data inputting and outputting unit 5 displays data or the like required by a user, on the display section.

In more detail, the data inputting and outputting unit 5 transmits and receives at least a part of data by wireless communication. The data includes, for example, the equipment data, the inspection data, the maintenance management data and the operation data. The data inputting and outputting unit 5 is, for example, a tablet terminal, a smartphone, a personal computer or the like. The tablet terminal and smartphone are portable by the user. Further, the personal computer can be installed so as to be used by a commanding officer in a command center, or the user or the like who performs maintenance on the ground. Note that the data inputting and outputting unit 5 may have a function of the equipment information reading unit 4.

The equipment information managing unit 6 associates the identification information of the facility equipment 101 to be inspected, and the inspection data that is inputted to the data inputting and outputting unit 5 and stores the information and the data in the data storing unit 1. Thereby, the inspection data corresponding to the facility equipment 101 are accumulated in the data storing unit 1. Further, the equipment information managing unit 6 extracts the inspection data of a past of the facility equipment 101 to be inspected from the data storing unit 1 based on the identification information. Further, the equipment information managing unit 6 controls the data inputting and outputting unit 5 to display the extracted inspection data on the display section. This allows the user to compare present inspection data and the past inspection data, for example, and to monitor and manage the facility equipment 101 in more detail.

Further, the equipment information managing unit 6 extracts equipment data (at least one of the design data and the installation position data) of the facility equipment 101 to be inspected from the data storing unit 1, based on the identification information. Further, the equipment information managing unit 6 controls the data inputting and outputting unit 5 to display the extracted equipment data on the display section. Accordingly, the user can perform inspection while confirming a structure at the time of design, the circuit configuration, the position information and the like. Extraction and display of the design data and the installation position data are started by an operation of the user via the data inputting and outputting unit 5, for example. Note that the equipment information managing unit 6 performs abnormality determination by using various data. Details of the abnormality determination by the equipment information managing unit 6 are described later.

The maintenance information managing unit 7 extracts the maintenance management data of the facility equipment 101 to be inspected from the data storing unit 1 based on the identification information. Further, the maintenance information managing unit 7 controls the data inputting and outputting unit 5 to display the extracted maintenance management data on the display section. This allows the user to confirm the maintenance management data for performing maintenance and maintenance work. Extraction and display of the maintenance management data are started by the operation of the user via the data inputting and outputting unit 5, for example.

Further, the maintenance information managing unit 7 extracts maintenance management data concerning an abnormal site of the facility equipment 101 from the data storing unit 1 based on the equipment data. Further, the maintenance information managing unit 7 controls the data inputting and outputting unit 5 to display the extracted maintenance management data on the display section. In other words, the maintenance information managing unit 7 causes the display section to display the maintenance management data when the user determines that countermeasures are necessary by inspection. For example, the data inputting and outputting unit 5 sends information on a failure site (abnormal site) to the equipment information managing unit 6 or the maintenance information managing unit 7. Thereafter, the maintenance information managing unit 7 extracts maintenance management data concerning the abnormal site based on the design data, for example. The maintenance management data concerning the abnormal site includes at least one of a replacement component for the abnormal site, a storage location for the replacement component, a replacement method of the replacement component, a maintenance work procedure for the abnormal site and a maintenance work history of the abnormal site. The storage location is a division separated on a railroad track, for example. Further, the maintenance information managing unit 7 controls the data inputting and outputting unit 5 to display the extracted maintenance management data on the display section. This allows the user to confirm the maintenance management data for executing the countermeasures to the abnormal site.

The operation information managing unit 8 extracts the operation data of the facility equipment 101 to be inspected from the data storing unit 1 based on the identification information. Further, the operation information managing unit 8 controls the data inputting and outputting unit 5 to display the extracted operation data on the display section. Together with the operation data such as a past traveling history, this allows the user to determine the state of the facility equipment 101 more appropriately. Extraction and display of the operation data are started by the operation of the user via the data inputting and outputting unit 5, for example.

Note that the equipment information managing unit 6, the maintenance information managing unit 7 and the operation information managing unit 8 process data into a format required in the data inputting and outputting unit 5 or a format defined in advance, and transmit the data to the data inputting and outputting unit 5.

Next, details of abnormality determination by the equipment information managing unit 6 are described.

The operation information managing unit 8 extracts operation data of related equipment relating to the facility equipment 101 from the data storing unit 1. The related equipment is, for example, a same type of facility equipment 101 provided in another vehicle. Further, the equipment information managing unit 6 specifies an abnormal site in the related equipment based on the operation data of the related equipment. Thereby, a similar abnormality in the other vehicle can be determined. Conditions for specifying an abnormal site may be set based on, for example, design data included in the equipment data, a failure history and a maintenance history that are included in the maintenance management data, past operation data of the related equipment and the like. Analogous or similar abnormalities are highly likely to occur in the same type of facility equipment 101 installed elsewhere. Accordingly, abnormalities can be found out early.

Further, the equipment information managing unit 6 specifies an abnormal site when the operation data satisfies a condition that is set in advance based on at least one of the equipment data, the maintenance management data and the past operation data. In other words, the equipment information managing unit 6 determines whether or not a similar problem to a problem that occurred in the past is occurring, and automatically detects an abnormality. The condition set in advance is, for example, a threshold that is set in advance by the user, or the like. Further, this condition can be set, for example, based on the design data (for example, a simulation at the time of design, test result information and the like) included in the equipment data, based on the failure history and the maintenance history included in the maintenance management data, and based on the past operation data and the like. Further, the equipment information managing unit 6 may control a notifying unit to notify that an abnormal site is specified. The notifying unit (not illustrated) is provided inside the equipment managing apparatus 100, and automatically notifies occurrence of an abnormality to maintenance staff.

Further, the maintenance information managing unit 7 may extract the maintenance management data concerning the abnormal site specified by the equipment information managing unit 6 from the data storing unit 1. Further, the equipment information managing unit 6 may extract the design data and the like together with the maintenance management data from the data storing unit 1.

As above, according to the first embodiment, the equipment information managing unit 6 associates the identification information of the facility equipment 101 to be inspected, and the inspection data with each other and stores the information and the data in the data storing unit 1. Further, the equipment information managing unit 6 extracts the inspection data of the past from the data storing unit 1 based on the identification information and controls the data inputting and outputting unit 5 to display the extracted inspection data on the display section. Further, the maintenance information managing unit 7 extracts the maintenance management data from the data storing unit 1 based on the identification information, and controls the data inputting and outputting unit 5 to display the extracted maintenance management data on the display section. Further, the operation information managing unit 8 extracts the operation data from the data storing unit 1 based on the identification information and controls the data inputting and outputting unit 5 to display the extracted operation data on the display section. Thereby, data necessary for inspection, a work procedure of maintenance or the like can be presented to a worker and a manager, and an inspection result and a work result of maintenance or the like can be stored. As a result, monitoring, and management and maintenance of the facility equipment 101 can be more facilitated.

Further, the data storing unit 1 may be connected to at least one of the equipment information managing unit 6, the maintenance information managing unit 7 and the operation information managing unit 8 via a public line. The public line is the Internet, for example. Note that the connection may be wired or wireless. The data storing unit 1 is provided on a cloud, for example. In other words, the data storing unit 1 is provided separately from the data inputting and outputting unit 5 and the like. In this case, the data storing unit 1 may be shared by a plurality of equipment managing apparatuses 100, for example. For example, maintenance and version upgrades of the plurality of equipment managing apparatuses 100 are performed for the one data storing unit 1. In other words, work is collectively performed for the plurality of equipment managing apparatuses 100. Thereby, management of the equipment managing apparatuses 100 themselves can be more facilitated.

Further, the data inputting and outputting unit 5 may be connected to at least one of the equipment information managing unit 6, the maintenance information managing unit 7 and the operation information managing unit 8 via a public line. The public line is, for example, the Internet. Note that the connection may be wired or wireless. The data storing unit 1, the equipment information managing unit 6, the maintenance information managing unit 7 and the operation information managing unit 8 are provided on a cloud, for example. In this case, the data storing unit 1 is also provided separately from the data inputting and outputting unit 5 and the like. Accordingly, management of the equipment managing apparatus 100 itself can be more facilitated.

Note that the facility equipment 101 is not limited to railroad vehicles and equipment that is mounted on the railroad vehicles. The facility equipment 101 may be equipment used for public infrastructure systems, such as electric power systems, water and sewage systems, and building monitoring systems, and may be equipment used for factory production systems and the like.

### (Second Embodiment)

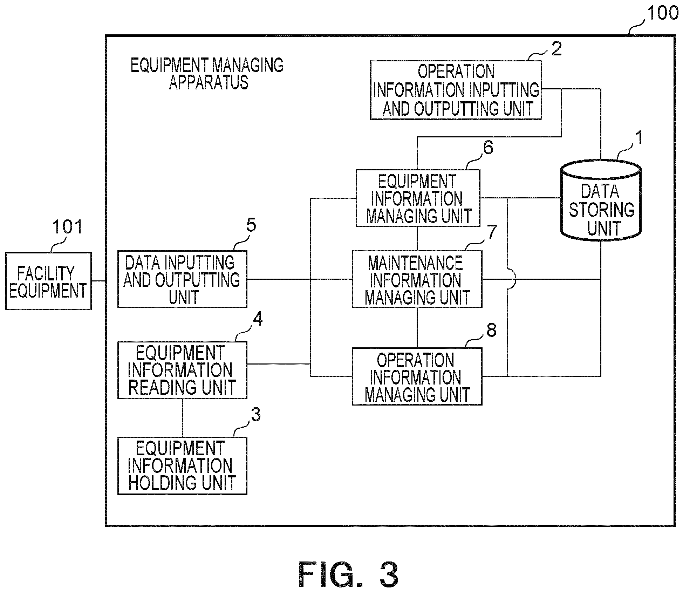

Figure 3 is a block diagram showing a configuration of an equipment managing apparatus 100 according to a second embodiment. The second embodiment differs from the first embodiment in that an equipment information reading unit 4 communicates with an equipment information managing unit 6 without going through a data inputting and outputting unit 5.

The equipment information reading unit 4 sends identification information to the equipment information managing unit 6 by wireless communication. The equipment information reading unit 4 has a Wi-Fi (registered trademark) radio, for example. Accordingly, the equipment information reading unit 4 sends the identification information to the equipment information managing unit 6 without going through the data inputting and outputting unit 5. The equipment information reading unit 4 is installed, for example, in a vicinity of an equipment information holding unit 3, or the like so as to be able to read specifying information.

The other configurations of the equipment managing apparatus 100 according to the second embodiment are similar to the corresponding configurations of the equipment managing apparatus 100 according to the first embodiment, and therefore, detailed explanation thereof is omitted.

In the second embodiment, the equipment information reading unit 4 can perform wireless communication, and therefore, a user does not have to go to a location where the facility equipment 101 is provided to read the specifying information. This saves a time and effort of inspection work. Furthermore, monitoring and management of the facility equipment 101 that is provided in a location where it is difficult for people to enter can be made easier.

The equipment managing apparatus 100 according to the second embodiment can obtain a similar effect to that of the first embodiment.

### (Third Embodiment)

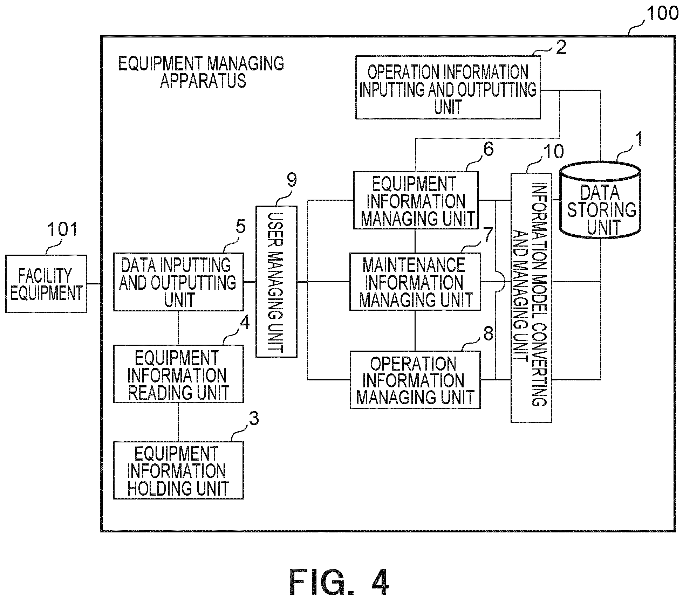

Figure 4 is a block diagram showing a configuration of an equipment managing apparatus 100 according to a third embodiment. The third embodiment differs from the first embodiment in that a user managing unit 9 and an information model converting and managing unit 10 are provided.

The equipment managing apparatus 100 further includes the user managing unit 9 and the information model converting and managing unit 10.

The user managing unit 9 permits use of the equipment managing apparatus 100 to a specific user. The user managing unit 9 determines whether or not the user can operate a data inputting and outputting unit 5 by, for example, login management or the like. This can enhance security. Further, the user managing unit 9 may store a usage status of a user in a data storing unit 1.

The information model converting and managing unit 10 structures data that is stored in the data storing unit 1 based on equipment data. In more detail, the information model converting and managing unit 10 creates hierarchical structure data of a configuration of facility equipment 101 based on design data included in the equipment data, and structures the data stored in the data storing unit 1 based on the hierarchical structure data. The hierarchical structure data are data in a hierarchical structure state, concerning components of the facility equipment 101. In more detail, the information model converting and managing unit 10 structures at least one of the equipment data, inspection data, maintenance management data and operation data.

Further, in more detail, the information model converting and managing unit 10 structures the data that are stored in the data storing unit 1 by using an ontology. For example, the information model converting and managing unit 10 conceptualizes (generalizes) the components of the facility equipment 101 by structuring by using terms and the like in the design data, and creates the hierarchical structure data. The information model converting and managing unit 10 structures data by linking data and human movements so as to correspond to the hierarchical structure of the facility equipment 101, for example. The human movements include, for example, inspecting, moving, reading numbers, listening to sound, smelling, touching to confirm whether the temperature is high or low, and the like. By structuring using an ontology, constituents of the facility equipment 101 are conceptualized, and by using relationships (hierarchical structure) of the constituents, the data can be systematized so that the data can be understood by humans and processed by a computer. As a result, association between data can be performed appropriately.

Further, the information model converting and managing unit 10 associates structured data with each other. In more detail, the information model converting and managing unit 10 associates the hierarchical structure data, and the structured data (at least one of the equipment data, the inspection data, the maintenance management data and the operation data).

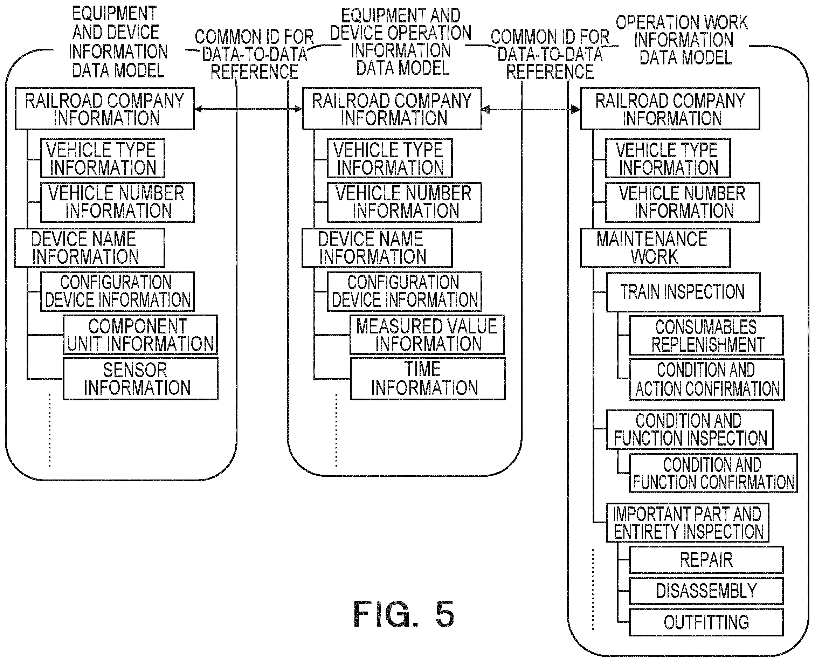

Figure 5 is a diagram showing one example of a data model by the information model converting and managing unit 10. Figure 5 shows data models of the hierarchical structure data, and the operation data and the maintenance management data that are structured, respectively. For example, an "ID (Identification)" is defined for each structured item. Further, in the example shown in Figure 5, a "common ID" is set to common hierarchy name "Railroad company information". The "common ID" is used to refer to data to data. The information model converting and managing unit 10 may define a table or the like that links "IDs", or may hierarchically define "ID numbers".

As shown in Figure 4, at least one of an equipment information managing unit 6, a maintenance information managing unit 7 and an operation information managing unit 8 extracts data associated with first facility equipment from the data storing unit 1, as data of second facility equipment having a same configuration as that of the first facility equipment. The first facility equipment is the old facility equipment 101 that is removed by replacement, for example. The second facility equipment is the new facility equipment 101 to which identification information different from the first facility equipment is caused to correspond. The information model converting and managing unit 10 manages components with abstract names. In other words, the information model converting and managing unit 10 defines the first facility equipment and another piece of equipment called the second facility equipment as the same configurations. Since the first facility equipment and the second facility equipment are conceptually the same, common operations concerning maintenance and management can be used, for example. Accordingly, for example, the maintenance information managing unit 7 extracts maintenance management data that is common between the first facility equipment and the second facility equipment. Note that this is not limited to the maintenance management data and also similarly applies to the cases of the equipment data except for the hierarchical structure data, the inspection data and the operation data.

The other configurations of the equipment managing apparatus 100 according to the third embodiment are similar to the corresponding configurations of the equipment managing apparatus 100 according to the first embodiment, and therefore detailed explanation thereof is omitted.

In the third embodiment, due to association between the data, it is possible to reduce a time and effort to relink the maintenance management data to the second facility equipment from the first facility equipment for each maintenance operation, as described above. This is because even though a generation of the facility equipment 101 changes, the configuration itself does not greatly change. Further, even if the first facility equipment is updated to the second facility equipment, handling of the operation data and the inspection data is also highly likely to be almost the same. When managing linking of "IDs" with a table or the like, for example, the information model converting and managing unit 10 changes allocation of data by transferring data linking from the first facility equipment to the second facility equipment. Thereby, data allocation can be made easy in the case of replacement of the facility equipment 101, and in the case of data that can be shared by pieces of the facility equipment 101 existing. As a result, management of the facility equipment 101 can be made easy. Note that information concerning replacement of the facility equipment 101 can be managed by the maintenance management data or the like, for example. The information concerning replacement includes information of the first facility equipment and the second facility equipment, and a replacement time, for example.

If the information model converting and managing unit 10 is not provided, it is necessary to link the configuration of the facility equipment 101 and the data to each other while visualizing them (displaying data) one by one. In contrast to this, in the third embodiment, data allocations can be managed collectively.

Note that the first facility equipment and the second facility equipment do not have to be the same pieces of equipment. In other words, at least one of the equipment information managing unit 6, the maintenance information managing unit 7 and the operation information managing unit 8 may extract the data of the first facility equipment from the data storing unit 1, as the data of the second facility equipment having a configuration analogous to that of the first facility equipment. For example, "the second facility equipment analogous to the first facility equipment" refers to the case where the same type of facility equipment 101 is used in part of a plurality of same configurations (vehicles), the case where the names on the equipment data are analogous, and the like. For example, the same type of facility equipment 101 provided in another vehicle and related equipment are highly likely to be almost the same as each other concerning handling of the operation data and the inspection data, a method of maintenance and management and the like. Further, in the different pieces of facility equipment 101, the same or analogous components may be used. In this case, they are also highly likely to be almost the same concerning the method of maintenance and management, and the like. In this way, monitoring and management of the facility equipment 101 can be made easier by using the analogous configurations and structures.

The equipment managing apparatus 100 according to the third embodiment can obtain a similar effect to that of the first embodiment. Further, the second embodiment may be combined with the equipment managing apparatus 100 according to the third embodiment.

Note that when the facility equipment 101 is newly added, a model can also be created again.

At least a part of a data processing method in the equipment managing apparatus 100 according to the present embodiment may be configured by hardware, or may be configured by software. When it is configured by software, a program that realizes at least part of the functions of the equipment managing apparatus 100 may be stored in a recording medium such as a flexible disk, or a CD-ROM, and may be read and executed by a computer. The recording medium is not limited to a detachable type such as a magnetic disk or an optical disk, and may be a fixed type recording medium such as a hard disk device or a memory. Further, a program that realizes at least part of the functions of the equipment managing apparatus 100 may be distributed via a communication line (also including wireless communication) such as the Internet. Furthermore, the program may be brought into an encrypted, modulated or compressed state, and then distributed via a wired line or a wireless line such as the Internet, or may be stored in a recording medium and then distributed.

Although some embodiments of the present invention are described, these embodiments are presented as examples and are not intended to limit the scope of the invention. These embodiments can be implemented in various other modes, and various omissions, replacements, and changes can be made in a range without departing from the gist of the invention. These embodiments and modifications thereof are included in the scope of the invention described in the claims and the equivalents thereof as included in the scope and the gist of the invention.

## Claims

1. An equipment managing apparatus, comprising:
an operation information inputting and outputting unit that obtains operation data of facility equipment, and stores the operation data in a data storing unit that stores equipment data concerning the facility equipment, and maintenance management data concerning maintenance and management of the facility equipment;
an equipment information reading unit that reads specifying information for specifying the facility equipment, and obtains identification information that identifies the facility equipment based on the specifying information and the equipment data;
a data inputting and outputting unit that receives input of inspection data of the facility equipment, and controls a display section to display the inspection data;
an equipment information managing unit that associates the identification information of the facility equipment to be inspected, and the inspection data that is inputted to the data inputting and outputting unit with each other and stores the information and the data in the data storing unit, extracts the inspection data of a past of the facility equipment to be inspected from the data storing unit based on the identification information, and controls the data inputting and outputting unit to display the extracted inspection data on the display section;
a maintenance information managing unit that extracts the maintenance management data of the facility equipment to be inspected from the data storing unit based on the identification information, and controls the data inputting and outputting unit to display the extracted maintenance management data on the display section; and
an operation information managing unit that extracts the operation data of the facility equipment to be inspected from the data storing unit based on the identification information, and controls the data inputting and outputting unit to display the extracted operation data on the display section.

2. The equipment managing apparatus according to claim 1, wherein the data inputting and outputting unit transmits and receives at least a part of data by wireless communication.

3. The equipment managing apparatus according to claim 1 or claim 2, wherein the data storing unit is connected to at least one of the equipment information managing unit, the maintenance information managing unit and the operation information managing unit via a public line.

4. The equipment managing apparatus according to claim 1 or claim 2, wherein the data inputting and outputting unit is connected to at least one of the equipment information managing unit, the maintenance information managing unit and the operation information managing unit via a public line.

5. The equipment managing apparatus according to any one of claim 1 to claim 4, further comprising:
an information model converting and managing unit that structures data that is stored in the data storing unit based on the equipment data, and associates the structured data to each other,
wherein as data of second facility equipment having a same or analogous configuration as or to that of first facility equipment, at least one of the equipment information managing unit, the maintenance information managing unit, and the operation information managing unit extracts data associated with the first facility equipment from the data storing unit.

6. The equipment managing apparatus according to claim 5, wherein the information model converting and managing unit structures the data that is stored in the data storing unit by using an ontology.

7. The equipment managing apparatus according to any one of claim 1 to claim 6, wherein the maintenance information managing unit extracts the maintenance management data concerning an abnormal site of the facility equipment from the data storing unit based on the equipment data.

8. The equipment managing apparatus according to claim 7, wherein the maintenance management data concerning the abnormal site includes at least one of a replacement component for the abnormal site, a storage location of the replacement component, a replacement method of the replacement component, a maintenance work procedure for the abnormal site, and a maintenance work history of the abnormal site.

9. The equipment managing apparatus according to claim 7 or claim 8,
wherein the operation information managing unit extracts the operation data of related equipment relating to the facility equipment from the data storing unit, and
the equipment information managing unit specifies the abnormal site in the related equipment based on the operation data of the related equipment.

10. The equipment managing apparatus according to any one of claim 7 to claim 9, wherein the equipment information managing unit specifies the abnormal site when the operation data satisfies a condition set in advance based on at least one of the equipment data, the maintenance management data, and the operation data of the past.

11. The equipment managing apparatus according to any one of claim 1 to claim 10, wherein the equipment information managing unit extracts the equipment data of the facility equipment to be inspected from the data storing unit based on the identification information, and controls the data inputting and outputting unit to display the extracted equipment data on the display section.

12. The equipment managing apparatus according to any one of claim 1 to claim 11, wherein the equipment information reading unit sends the identification information to the equipment information managing unit by wireless communication.

13. The equipment managing apparatus according to any one of claim 1 to claim 12, wherein the facility equipment includes at least one of a railroad vehicle and equipment that is mounted on the railroad vehicle.
